# EUROPEAN PATENT APPLICATION

(11) **EP 4 542 745 A1**
(43) Date of publication of application: **23.04.2025**
(21) Application number: 23204549.2
(22) Date of filing: 19.10.2023
(51) Int. Cl.: H01M 50/262, H01M 50/264, H01M 50/271, H01M 50/289, H01M 50/291, H01M 10/04, G03B 17/00, G08B 13/196, E05B 47/00

(54) **BATTERY HOUSING**

(71) Applicant: Verisure Sàrl, 1290 Versoix (CH)
(72) Inventor: Kristensson, Daniel, 261 93 Saxtorp (SE); Bergöö, Mikael, 275 37 Sjöbo (SE); Hansson, Mikael, 244 32 Kävlinge (SE)
(74) Representative: Hansson Thyresson AB

(57) **Abstract**

A unit for a security system is provided. The unit comprises a battery housing (100), comprising a casing (101). The casing (101) comprises a bottom portion, a top portion (103) and at least one wall section forming a battery compartment. The battery housing (100) further comprises a cover (106) releasably connectable to the casing (101). The battery housing (100) further comprises a battery unit (108) removably arrangeable in the battery compartment (105), and displacement means (107) configured to displace the battery unit (108) between a first position and a second position in the battery compartment.

## Description

### TECHNICAL FIELD

The present invention relates to a unit for a security system, a method for clamping a battery unit in a battery housing of such unit for a security system, and a system comprising such unit.

### BACKGROUND

Relating to monitoring devices, there is generally a technical incompatibility between (i) the ease with which a battery can be physically replaced in the device, especially when the device is placed high-up on the wall of a room, or in another difficult to reach position, and (ii) ensuring a robust and reliable electrical connection to the battery in order to meet EN standards (European standards).

One EN standard requires a monitoring device to be able to withstand a shock of 100 G applied in any direction.

If the battery is loosely fixed in the device, it is beneficial for the user installing and exchanging the battery. However, the battery forms an independent mass that may move within the housing of the device. When the device is exposed to a high shock or impact, caused e.g., by a sudden acceleration/retardation, there is a risk that this movement of the battery breaks electrical connections, either momentarily, or more permanently.

If, on the other hand, the electrical connection is accomplished via e.g., strong spring terminals, the mechanical strength of the electrical connection is enhanced, and the risk of movement of the battery when exposed to shock is reduced. However, this will significantly reduce the ease of battery removal and battery insertion, i.e., reduce user convenience.

Therefore, there is a need for an improved battery housing, that provides both a reliable electrical connection, and is convenient and easy to handle for a user.

### SUMMARY

The invention is defined by the appended independent claims. Additional features and advantages of the concepts disclosed herein are set forth in the description which follows, and in part will be clear from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims, or may be learned by the practice of the disclosed concepts as set forth herein.

According to a first aspect, there is provided a battery housing comprising a casing comprising a bottom portion, a top portion and at least one wall section forming a battery compartment, and a cover releasably connectable to the casing. The battery housing further comprises a battery unit removably arrangeable in the battery compartment, and displacement means configured to displace the battery unit between a first position and a second position in the battery compartment. The displacement means configured to move the battery unit between the first and second positions provides for an easy insertion and exchange of batteries for a user. The user does not need to be aware of the battery unit being securely clamped in the battery compartment, or how it takes place. The user only inserts the battery unit into the battery compartment and attaches the cover. They are unaware that the battery unit is displaced into a second position within the battery compartment, and need not themselves take care of or be concerned with the clamping of the battery unit.

In one embodiment, there is provided a unit for a security system. The unit comprises a battery housing as above. In one embodiment, the security system is e.g., a keypad for unlocking a door. In other embodiments, there is provided a unit for a surveillance system or an alarm system.

In one embodiment, the first position is an insertion position, in which the battery unit is inserted into the battery compartment, and the second position is a contact position, in which the battery unit is pressed against one or more electrical contacts of the casing. In the first insertion position, the battery unit is loosely held in the battery compartment by means of a light spring force exerted by the electrical contacts, which may be formed as springs, e.g., coil springs, helical springs, torsion springs, conical springs, disc springs, leaf springs etc. The second position is a clamping position in which the battery unit is steadily clamped against electrical contacts in the housing, both to withstand impact or shock, and for accomplishing a robust electrical connection.

In one embodiment, the one or more electrical contacts are one of a single electrical contact, a first and a second electrical contact, or a plurality of electrical contacts.

In one embodiment, the casing comprises an opening on at least a first side opposite the wall section. The opening is configured to allow insertion and removal of the battery unit, and the opening is configured to be closed by means of the cover. The one or more electrical contacts are arranged at a portion of the casing that is not opposite, or facing, the opening.

In one embodiment, the electrical contacts are arranged in the top of the casing, and the displacement means is configured to push the battery unit upwards from the first position into the second position.

In one embodiment, when the cover is not connected to the casing, the battery unit is in the first position, and when the cover is connected to the casing, the battery unit is in the second position. By attaching the cover to the casing, the battery unit is displaced between the first and second position. It provides easy handling for the user exchanging batteries in the unit.

In one embodiment, the displacement means is configured to displace the battery unit in a displacement direction that is different from an insertion direction of the battery unit. It is favourable to displace the battery unit in a direction different from the insertion direction since, when an external force is applied to the battery housing or the unit in which the battery housing is arranged, the battery housing will only be able to move against one or more portions of the casing. In one embodiment, the casing being produced in one piece, is robust enough not to break due to movement of the battery housing therein. In one embodiment, the interior of the casing is designed to tightly enclose the battery housing, movement therein of the battery housing is thereby further restricted.

In one embodiment, the displacement means is configured to displace the battery unit in a displacement direction that is different from a connection direction of the cover when this is connected to the casing. This is favourable since as an external force is applied to the battery housing or the unit in which the battery housing is arranged, the battery housing will not be able to move in the same direction as the direction in which the cover is released. Thus, the battery housing will not cause the cover to release from the casing, e.g., by connection means loosening, untightening, or breaking.

In one embodiment, the insertion direction of the battery unit coincides with the connection direction of the cover.

In one embodiment, the insertion direction of the battery unit is substantially perpendicular to the displacement direction.

In one embodiment, the insertion direction of the battery unit is substantially perpendicular to the connection direction of the cover.

In one embodiment, the battery unit comprises a first engagement means, and the casing comprises a second engagement means. The first and second engagement means are configured to form a mechanical restraint between the battery unit and the casing when the battery unit is in the second position.

In one embodiment, the first and second engagement means are configured to interact to form an interlock between the battery unit and the casing when the battery unit is in the second position.

In one embodiment, the first and second engagement means are configured to release the restraining or interlocking between the battery unit and the casing when the battery unit is in the first position, or when the cover is removed from the casing.

In one embodiment, the first engagement means comprises a leg with a hook portion, and the second engagement means comprises an opening. The leg is receivable in the opening, and the leg is slidable in the opening when the battery unit is displaced from the first position to the second position. The hook portion is configured to engage with an edge of the opening in the second position of battery unit. The engagement means provides additional stability between the battery unit and the casing when the battery unit is in the second position. This provides for a robust clamping of the battery unit inside the casing, the two units being connected with each other, making them less vulnerable to shocks and impacts.

In one embodiment, the casing comprises a ledge configured to enclose at least a portion of the battery unit in the second position. This provides for additional stability between the casing and the battery unit being in the second position, and provides for additional resistance to shock and impacts.

In one embodiment, the displacement means comprises a wedge member arranged on the cover. The wedge member is configured to displace the battery unit from the first position into the second position upon connection of the cover to the casing.

In one embodiment, the wedge member is arranged in a lower portion of the cover and configured to wedge in below the battery unit being in the first position, and wedging the battery unit upwards into the second position upon connection of the cover to the casing.

In one embodiment, the cover is releasably lockable to the casing by means of a latching mechanism having interactable latching parts, at least one of which latching parts is displaceable. A displacement of the at least one displaceable latching part is configured to displace the battery unit between the first and second position. This embodiment is beneficial in that a locking of the cover to the casing is accomplished at the same time as a robust clamping of the battery unit is achieved.

In one embodiment, the battery unit is in the second position when the cover is locked to the casing. The latching mechanism for locking the cover to the casing is in this embodiment combined with the displacement means arranged in the cover.

In one embodiment, the latching mechanism is operable by means of a key member.

In one embodiment, the unit is one of a monitoring unit, a detector, an input interface unit, a control unit such as e.g., a central unit of an alarm installation, or an output interface such as e.g., a siren.

In one embodiment, the unit is a monitoring unit, and further comprises a camera.

In a second aspect, a system is provided, comprising at least one such unit. The system may be a surveillance system, an alarm system, a security system, such as a keypad for unlocking a door, or any other suitable system.

In a third aspect, a method for clamping a battery unit in a battery housing comprising a casing comprising a bottom portion, a top portion and at least one wall section forming a battery compartment, a cover releasably connectable to the casing and a battery unit. The method comprises the steps of arranging the battery unit in the battery compartment, and displacing the battery unit from a first position towards a second position.

In one embodiment, the step of displacing the battery unit comprises arranging a displacement means between the battery unit and the casing. The displacement means displaces the battery unit towards electrical contacts arranged in the casing.

In one embodiment, the step of arranging the battery unit in the battery compartment comprises inserting the battery unit in an insertion direction and the step of displacing the battery unit comprises displacing the battery unit in a displacement direction. The insertion direction is different from the displacement direction.

In one embodiment, the insertion direction is substantially perpendicular to the displacement direction.

In one embodiment, the step of arranging the battery unit in the battery compartment comprises inserting the battery unit in a generally horizontal direction into the battery compartment such that a bottom of the battery unit abuts against the bottom portion of the battery compartment.

In one embodiment, the step of displacing the battery unit comprises attaching a cover to the casing The cover comprises the displacement means which displaces the battery unit towards the electrical contacts.

In one embodiment, the step of displacing the battery unit comprises operating an operating means which interacts with a latching mechanism having interactable latching parts, at least one of which latching parts is displaceable, and displacing the displaceable latching part displaces the battery unit.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
- Fig. 1a: is a front view of a monitoring unit,
- Fig. 1b: is a perspective view of the monitoring unit,
- Fig. 2: is a perspective view of a battery housing of the monitoring unit in Figs 1a and 1b,
- Fig. 3: is a perspective front view of a casing of the battery housing in Fig. 2,
- Fig. 4: is a perspective back view of a cover of the battery housing in Fig. 2,
- Fig. 5: is a perspective side view of a battery unit,
- Fig. 6: is a perspective side view of the battery unit in Fig. 2, comprising batteries,
- Fig. 7: is a front view of the casing in Fig. 3,
- Fig. 8: is a front view of the casing in Figs 2 and 7, comprising the battery unit in Fig. 6,
- Fig. 9: is a side section view of the casing and battery unit in Fig. 8,
- Fig. 10: is a perspective section view of the battery unit partly inserted into the casing,
- Fig. 11: is a back perspective view of a portion of the casing and the battery unit,
- Fig. 12: is a perspective section view of the portion of the casing and the battery unit in Fig. 11,
- Fig. 13: is a perspective view of a portion of the casing and the battery unit,
- Fig. 14: is a perspective section view of the portion of the casing and the battery unit in Fig. 13,
- Fig. 15: is a perspective view of the cover being attached to the casing,
- Fig. 16: is a section view of a portion of the cover being attached to the casing,
- Fig. 17: is a perspective section view of a portion of the battery unit in a first inserted position in the casing,
- Fig. 18: is a perspective section view of a portion of the battery unit in a second inserted position in the casing,
- Fig. 19: is a perspective section view of a portion of the battery unit in the first inserted position in the casing,
- Fig. 20: is a perspective section view of a portion of the battery unit in the second inserted position in the casing,
- Fig. 21: is a side section view of a comparison between the first and second inserted positions of the battery unit in the casing,
- Fig. 22: is a perspective section view of the battery unit in the casing with the cover attached, and
- Fig. 23: is a flowchart of a method for securing an electrical contact of the battery unit in the battery housing.

Further, in the figures like reference characters designate like or corresponding elements or parts throughout the several figures.

### DETAILED DESCRIPTION

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the spirit and scope of the claimed invention.

Hereinafter, certain embodiments will be described more fully with reference to the accompanying drawings. It will be apparent to those skilled in the art that various modifications and variations can be made without departing from the inventive concept. Other embodiments will be apparent to those skilled in the art from consideration of the specification and practice disclosed herein. It is to be understood that elements and materials may be substituted for those illustrated and described herein, parts and processes may be reversed or omitted, certain features may be utilized independently, and embodiments or features of embodiments may be combined, all as would be apparent to the skilled person in the art.

The embodiments herein are provided by way of example so that this disclosure will be thorough and complete, and will fully convey the scope of the inventive concept, and that the claims be construed as encompassing all modifications, equivalents and alternatives of the present inventive concept which are apparent to those skilled in the art to which the inventive concept pertains. If nothing else is stated, different embodiments may be combined with each other.

Although reference may be made to directions (e.g. left, right, up, down, upper, lower) as shown in the figures, it will be appreciated that these references are purely for illustrative purposes, and that embodiments are not limited to such directions.

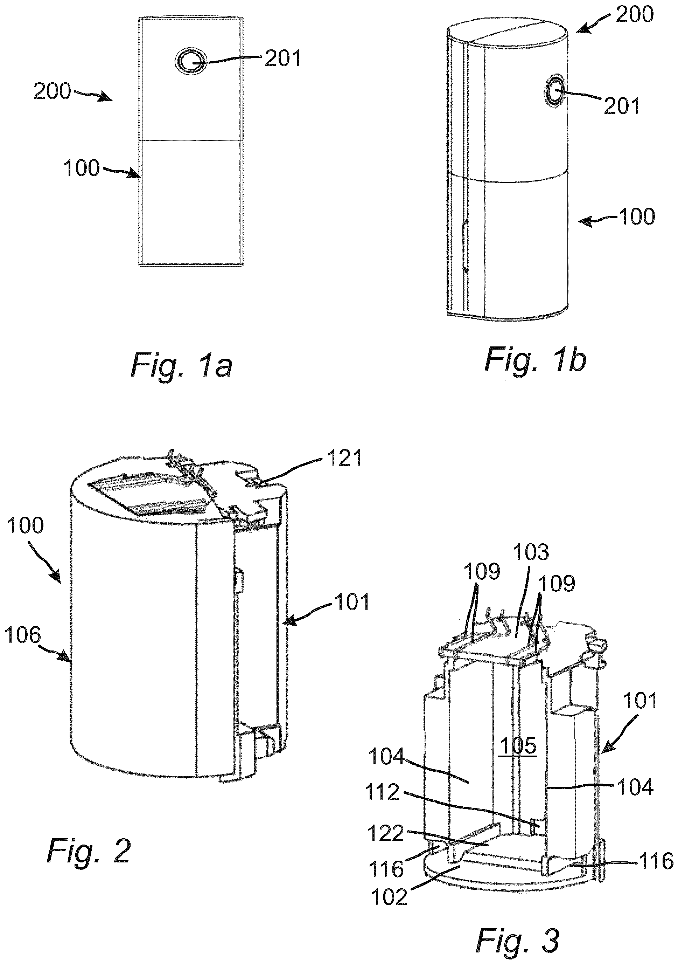

Figs 1a and 1b show a monitoring unit 200 for a surveillance system. The monitoring unit 200 comprises a camera 201 and a battery housing 100 configured to house one or more batteries for supplying power to the monitoring unit 200.

Fig. 2 shows the battery housing 100. The battery housing 100 comprises a casing 101 and a cover 106 releasably connectable to the casing 101. The casing 101, shown in Fig. 3, comprises a bottom portion 102, a top portion 103 and at least one wall section 104 which together form a battery compartment 105. The bottom portion 102 comprises a platform portion 122 arranged a vertical distance above the remainder of the bottom portion 102.

The casing 101 further comprises electrical contacts 109 configured to be in electrical contact with the one or more batteries housed in the battery compartment 105. The casing 101 comprises a first opening or through recess 112 arranged in a back wall 104 of the casing 101. The casing 101 comprises a second opening or through recess 121 arranged in the top portion 103 of the casing 101. The casing 101 comprises a latching mechanism 113 configured to lock the cover 106 to the casing 101.

The cover 106 comprises at least one cover wall portion 114 and a cover bottom portion 117. Guide means 115 are arranged in the cover bottom portion 117, which guide means are configured to be receivable in complementary shaped receptacles 116 in the casing 101.

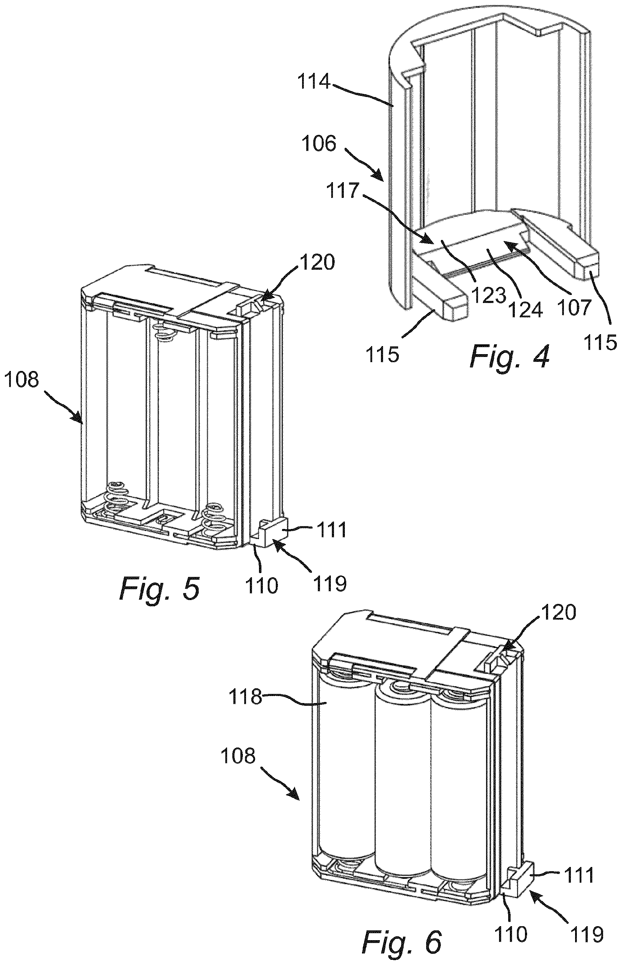

Referring to Figs 5-6, the battery housing 100 further comprises a battery unit 108. The battery unit 108 comprises compartments for one or more batteries. The battery unit 108 is shown in Fig. 5 without batteries inserted, and in Fig. 6 with batteries inserted. The battery unit 108 is configured to be received in the battery compartment of the casing 101. The battery unit 108 comprises a first engagement means 119 and a second engagement means 120.

The first engagement means 119 comprises a leg portion 110 extending perpendicular from a back wall of the battery unit 108. A hook portion 111 extends perpendicular in an upwards direction at a distal end of the leg portion 110.

The second engagement means 120 comprises a protrusion extending in an upwards direction from a top surface of the battery unit 108.

Referring again to Fig. 4, the battery housing 100 further comprises displacement means 107. The displacement means comprises a wedge means 107 arranged in the cover bottom portion 117. The wedge means 107 comprises a horizontal surface 123 and an inclined surface 124. The displacement means 107 is configured to displace the battery unit 108 arranged in the battery compartment 105 between a first position and a second position, which will be further described below.

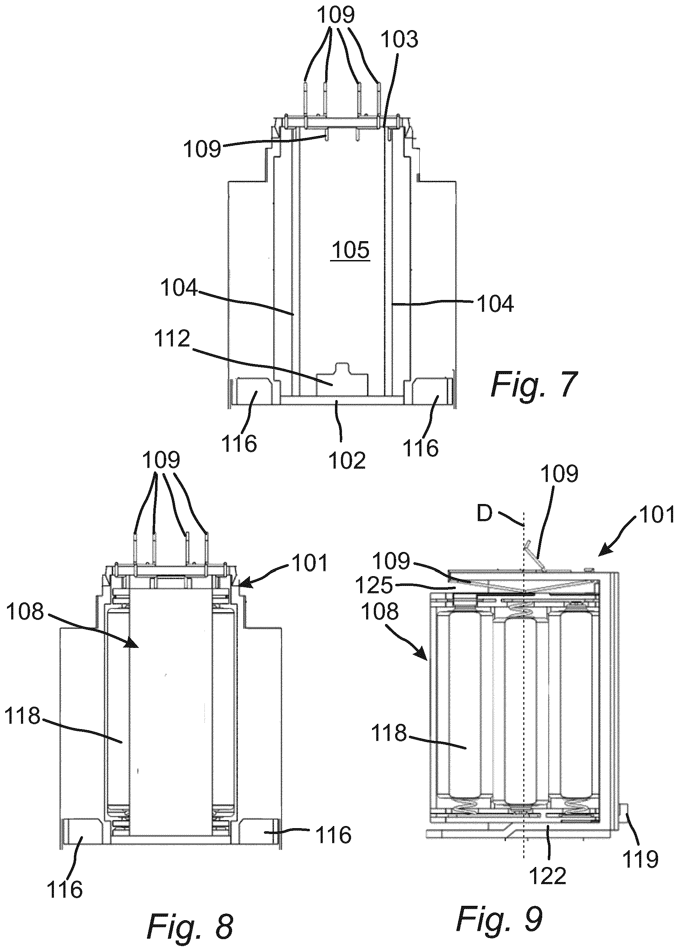

Figs 7-9 show the casing 101 without and with the battery unit 108 inserted in the battery compartment 105, respectively.

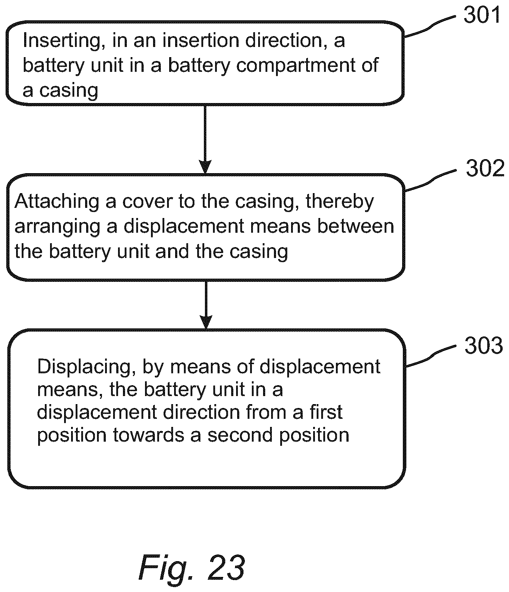

In the following, the function of the battery housing 100 will be further elaborated on, e.g., with reference to the flow chart in Fig. 23.

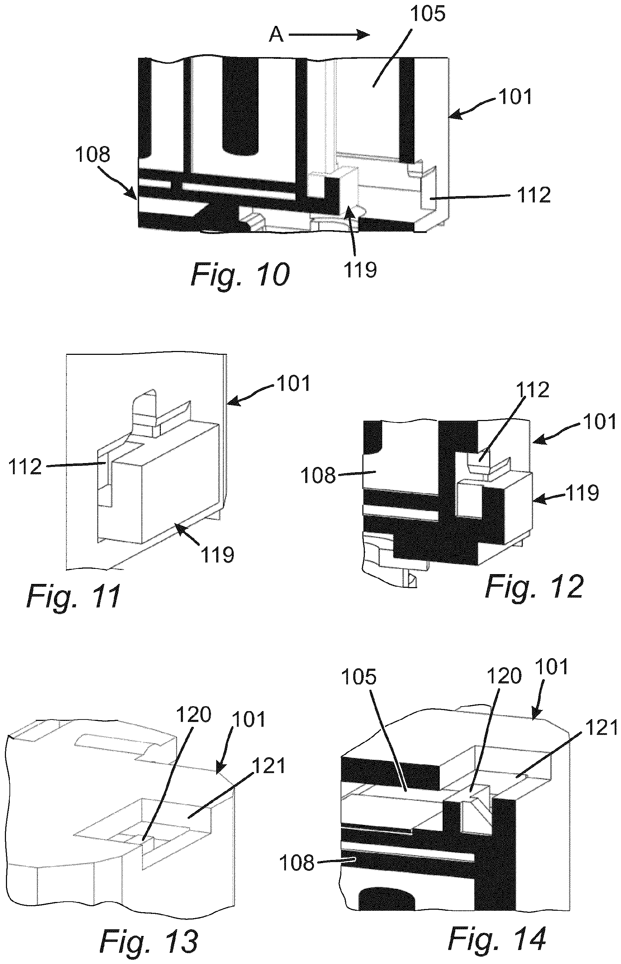

As shown in Fig. 10, the battery unit 108 is inserted 301 into the battery compartment 105 of the casing 101 in an insertion direction indicated by arrow A. By the insertion, the first engagement means 119 of the battery unit 108, protrudes through the first opening 112 of the casing 101, as shown in Figs 11-12. Upon insertion of the battery unit 108 into the battery compartment 105, the second engagement means 120 is located below the second opening 121 of the casing 101, as shown in Figs 13-14.

In the first, inserted, position, the battery unit 108 rests on the platform portion 122 of the bottom portion 102 of the casing 101. The electrical connection means 109 are shaped as a resilient organ or spring organ on the inside of the top portion 103 of the casing 101, exerting a pressure on the battery unit 108 when inserted into the battery compartment 105 and being in the first position. The inherent spring force of the electrical contacts 109 is adapted to hold the battery unit 108 in place in the battery compartment 105, at the same time as the spring force is low enough to allow ease of replacement of the battery unit 108 for a user.

The spring force of the portion of the electrical contact 109 located inside the battery compartment 105 is applied straight above the platform 122, according to dashed line D in Fig. 9. The position of the applied spring force is configured to level the battery unit 108 in the first position in the battery compartment 105 such that it rests on the platform 122.

Referring again to the flowchart in Fig. 23, the cover 106 is attached 302 to the casing 101. The guide means 115 of the cover 106 are inserted into the receptacles 116 of the casing 101 and the cover 106 is pushed towards the casing 101 in a direction C, which coincides with the insertion direction A of the battery unit 108.

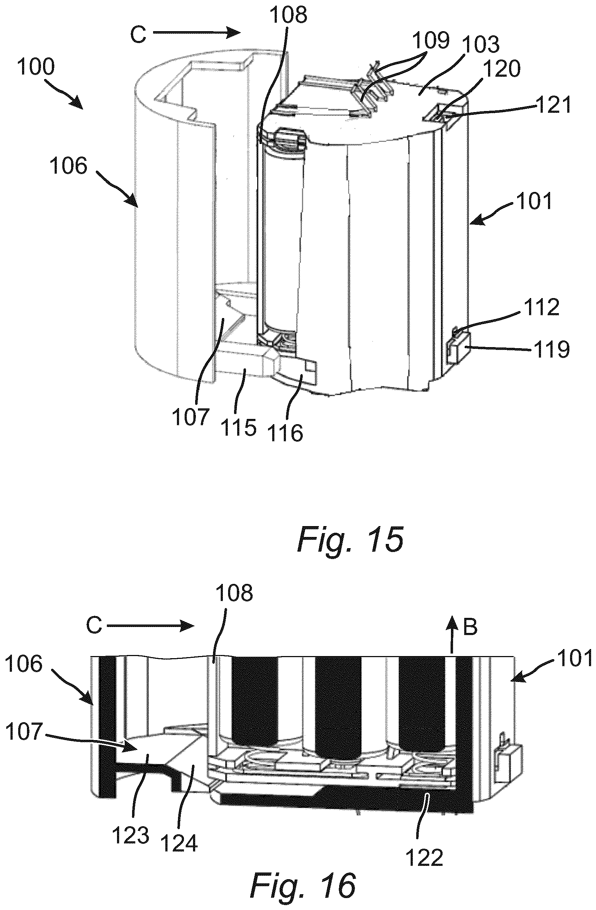

By displacing the cover 106 towards the casing 101, the inclined surface 124 of the displacement means 107 is wedged in between the battery unit 108 and the bottom portion 102 of the casing 101, as best shown in Fig. 16, such that the battery unit 108 slides on the inclined surface 124 and thus is displaced in an upwards displacement direction B. The battery unit 108 is displaced from the first position towards the second position. The second position is a horizontally elevated position compared to the first position. In the second position, the battery unit 108 is supported by the horizontal surface 123 of the displacement means 107.

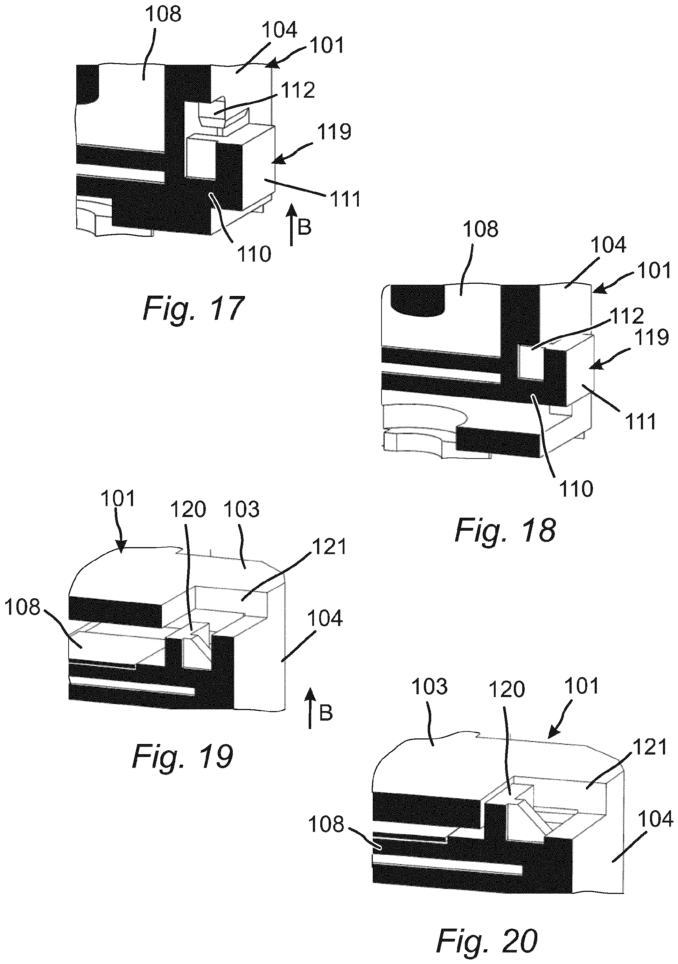

Referring to Fig. 17, in the first position of the battery unit 108, the leg portion 110 of the first engagement means 119 extends through the first opening 112 in the casing 101. The hook portion 111 of the first engagement means 119 is located on the outside of the rear wall portion 104 of the casing 101, right in front of the opening 112. Upon displacement of the battery unit 108 in the direction B, the hook portion 111 is displaced from the position in line with the first opening 112 in the casing 101, to a position in which it is offset from the first opening 112. The hook portion 111 is, in the offset position, as shown in Fig. 18, located on an outside of, and abutting against the wall portion 104 of the casing. Thus, the battery unit 108 is, in the second position, kept in place in a horizontal direction by means of the hook portion 111.

Referring to Fig. 19, in the first position of the battery unit 108, the second engagement means 120 is located below the second opening 121 in the casing 101. Upon displacement of the battery unit 108 in the direction B, the second engagement means 120 is displaced from the position below the second opening 121 in the casing 101, to a position in which it extends through the second opening 121. The second engagement means 120 is, in the second position, as shown in Fig. 20, located approximately in line with the top portion 103 of the casing 101, and abutting against a side surface of the second opening 121 of the casing 101. Thus, the battery unit 108 is, in the second position, kept in place in the horizontal direction by means of the second engagement means 120. In another embodiment, the second engagement means 120 may extend above the top portion 103 of the casing 101, when the battery unit 108 is in the second position.

The first 119 and second 120 engagement means also prevents the battery unit 108 from rotating in the battery compartment 105.

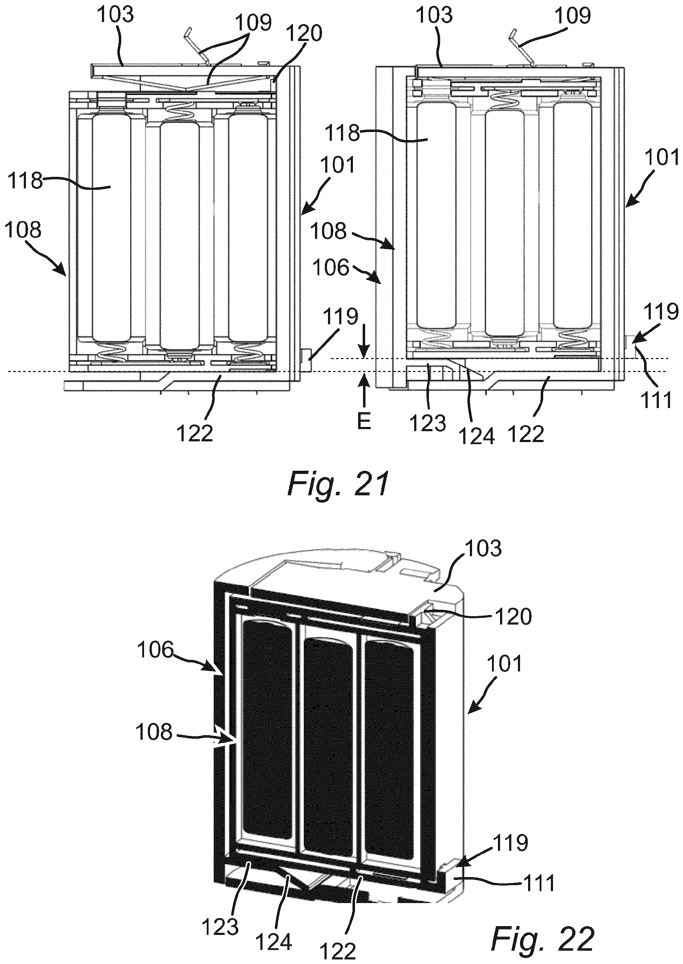

In Fig. 21, the casing 101 and the battery unit 108 inserted in the battery compartment 105 are shown with and without the cover 106 attached. The elevation of the battery unit 108 and its components without the cover 106 attached, and with the cover 106 is attached, respectively, is visualized by the dashed lines. To the left in Fig. 21, the battery unit 108 is inserted into the battery compartment 105 and is located in the first position. To the right in Fig. 21, the cover 106 is attached and the battery unit 108 is elevated a vertical distance E by means of the displacement means 107 into the second position.

In Fig. 22, the battery unit 108 is shown again in the second position. The hook portion 111 of the first engagement means 119 is abutting against the wall portion 104 of the casing 101. The second engagement means 120 extends through the second opening 121 of the casing 101, and abuts against one side surface of the second opening 121. The bottom portion of the battery unit 108 is elevated from the platform 122. The bottom portion of the battery unit 108 is supported by the horizontal surface 123 of the displacement means 107.

When the cover 106 is attached to the casing 101, the battery unit 108 cannot move in a vertical direction since it is clamped between the top portion 103 of the casing 101 and the horizontal surface 123 of the displacement means 107.

When the cover 106 is attached to the casing 101, the battery unit 108 cannot move in the reverse direction compared to the insertion direction A since the hook portion 111 of the first engagement means 119 prevents this by abutting the wall portion 104 of the casing 101.

When the cover 106 is attached to the casing 101, the battery unit 108 cannot tilt in a clockwise, referring to Fig. 21, direction, since the second engagement means 120 abuts a surface in the second opening 121 of the casing 101.

When the cover 106 is attached to the casing 101, the battery unit 108 cannot move further in the insertion direction A since it abuts the wall portion 104 of the casing 101.

Thus, in the second position of the battery unit 108, it is kept firmly in place by means of the wall portion 104 of the casing, the engagement means 119, 120, the horizontal surface 123 of the displacement means 107, the top portion of the casing 103 and the cover 106. In this position, a steady and robust electrical connection between the batteries 118 and the electrical contacts 109 of the casing 101 is established. Further, the battery unit 108 is robustly clamped such that it fulfills the EN standard requirements of the battery housing 100 being able to withstand a shock of 100 G applied in any direction.

Since the strong connection between the battery unit 108 and the electrical contacts 109 is achieved when the cover 106 is attached to the casing 101, the user handling the monitoring unit 200 is not required to force or press the battery unit 108 into position. The user merely puts the battery unit 108 in the battery compartment 105, and by attachment of the cover 106, the strong mechanical clamp is achieved without the knowledge or conscious involvement of the user.

Reversely, in order to remove the battery unit 108 from the battery compartment 105, the cover 106 is first removed. As the displacement means 107 slides out from below the battery unit 108, the battery unit 108 drops down in the battery compartment 105 and lands on the platform 122 of the battery compartment 105. In this position, the battery unit 108 is only held by the spring force exerted by the electrical contacts 109, as described above, which allows for easy removal and replacement.

In one embodiment, the casing 101 may include a ledge, behind which the battery unit 108 fits when it is positioned in the second position. The ledge provides for additional retention of the battery unit 108 in the position of electrical contact with the contacts 109. Alternatively, the cover 106 may provide one or more surfaces configured to achieve the same additional retention of the battery unit 108 to anchor the battery unit 108 against the rear wall portion 104 of the casing 101.

In an alternative design, the casing 101 includes a displacement mechanism. Preferably, the displacement mechanism is arranged between the cover and the battery unit. By attaching the cover, it presses against the mechanism, drives the mechanism, which displaces, or pushes, the battery unit upwardly against the electrical contacts, i.e., into the second position. In other words, the cover does not comprise any displacement means, and does not wedge the battery unit directly, but instead bears on the displacement mechanism which in turn wedges the battery unit. An advantage of this embodiment is that the cover may be made slimmer, and may be easier to handle for a user, compared to the cover comprising the displacement means.

As an alternative to the electrical contacts being disposed above the battery unit, and the battery unit being urged upwardly by the displacement means, in an alternative embodiment, the electrical contacts are arranged at a position below the battery unit. Insertion of the battery unit into the battery compartment places the battery unit "loosely" on the electrical contacts. The displacement means are arranged in an upper portion of the cover. By attachment of the cover to the casing, the displacement means clamps the battery unit downwardly into robust contact with the electrical contacts.

Throughout this specification, the word "may" is used in a permissive sense (i.e. meaning having the potential to), rather than in the mandatory sense (i.e. meaning must).

Throughout this specification, the words "comprise", "include", and variations of the words, such as "comprising" and "comprises", "including", "includes", do not exclude other elements or steps.

As used throughout this specification, the singular forms "a", "an", and "the", include plural referents unless explicitly indicated otherwise. Thus, for example, reference to "an" element includes a combination of two or more elements, notwithstanding use of other terms and phrases for one or more elements, such as "one or more" or "at least one".

The term "or" is, unless indicated otherwise, non-exclusive, i.e. encompassing both "and" and "or". For example, the feature "A or B" includes feature "A", feature "B" and feature "A and B".

Unless otherwise indicated, statements that one value or action is "based on", "in response to" and/or "in dependence on" another condition or value or action, encompass both instances in which the condition or value or action is the sole factor and instances where the condition or value or action is one factor among a plurality of factors.

Unless otherwise indicated, statements that "each" instance of some collection have some property should not be read to exclude cases where some otherwise identical or similar members of a larger collection do not have the property, i.e., each does not necessarily mean each and every.

If not explicitly stated, embodiments described above may be combined with each other.

## Claims

1. A unit for a security system, the unit comprising a battery housing (100) comprising:
a casing (101) comprising a bottom portion (102), a top portion (103) and at least one wall section (104) forming a battery compartment (105),
a cover (106) releasably connectable to the casing (101), and
a battery unit (108) removably arrangeable in the battery compartment (105),
wherein the battery housing (100) further comprises displacement means (107) configured to displace the battery unit (108) between a first position and a second position in the battery compartment (105).

2. The unit according to claim 1, wherein the first position is an insertion position, in which the battery unit (108) is inserted into the battery compartment (105), and wherein the second position is a contact position, in which the battery unit (108) is pressed against one or more electrical contacts (109) of the casing.

3. The unit according to claim 2, wherein the one or more electrical contacts (109) are one of a single electrical contact, a first and a second electrical contact, or a plurality of electrical contacts.

4. The unit according to any one of claims 2-3, wherein the casing (101) comprises an opening (125) on at least a first side opposite the wall section (104), wherein the opening (125) is configured to allow insertion and removal of the battery unit (108), wherein the opening (125) is configured to be closed by means of the cover (106), and wherein the one or more electrical contacts (109) are arranged at a portion of the casing (101) that is not opposite the opening (125).

5. The unit according to any of the preceding claims, wherein electrical contacts (109) are arranged in the top (103) of the casing (101), and wherein the displacement means (107) is configured to push the battery unit (108) upwards from the first position into the second position.

6. The unit according to any of the preceding claims, wherein when the cover (106) is unconnected to the casing (101), the battery unit (108) is in the first position, and wherein when the cover (106) is connected to the casing (101), the battery unit (108) is in the second position.

7. The unit according to any of the preceding claims, wherein the displacement means (107) is configured to displace the battery unit (108) in a displacement direction (B) that is different from an insertion direction (A) of the battery unit (108)

8. The unit according to claim 7, wherein the insertion direction (A) is substantially perpendicular to the displacement direction (B).

9. The unit according to any of the preceding claims, wherein the battery unit (108) comprises a first engagement means (119), and the casing (101) comprises a second engagement means (112), wherein the first and second engagement means (119, 112) are configured to form a mechanical restraint between the battery unit (108) and the casing (101) when the battery unit (108) is in the second position.

10. The unit according to claim 9, wherein the first and second engagement means (119, 112) are configured to interact to form an interlock between the battery unit (108) and the casing (101) when the battery unit (108) is in the second position.

11. The unit according to any of the claims 9-10, wherein the first engagement means (119) comprising a leg (110) with a hook portion (111), and the second engagement means comprises an opening (112), wherein the leg (110) is receivable in the opening (112), wherein the leg (110) is slidable in the opening (112) when the battery unit (108) is displaced from the first position to the second position, and wherein the hook portion (111) is configured to engage with an edge of the opening (112) in the second position of battery unit (108).

12. The unit according to any of the preceding claims, wherein the casing (101) comprises a ledge configured to enclose at least a portion of the battery unit (108) in the second position.

13. The unit according to any of the preceding claims, wherein the displacement means (107) comprises a wedge member (124) arranged on the cover (106), wherein the wedge member (124) is configured to displace the battery unit (108) from the first position into the second position upon connection of the cover (106) to the casing (101).

14. The unit according to claim 13, wherein the wedge member (124) is arranged in a lower portion of the cover (106) and configured to wedge in below the battery unit (108) being in the first position, and wedging the battery unit (108) upwards into the second position upon connection of the cover (106) to the casing (101).

15. The unit according to any of the preceding claims, wherein the cover (106) is releasably lockable to the casing (101) by means of a latching mechanism (113) having interactable latching parts, at least one of which latching parts is displaceable, and wherein displacement of the at least one displaceable latching part is configured to displace the battery unit (108) between the first and second position.

16. The unit according to claim 15, wherein the battery unit (108) is in the second position when the cover (106) is locked to the casing (101).

17. The unit according to any one of claims 15-16, wherein the latching mechanism (113) is operable by means of a key member.

18. The unit according to any of the preceding claims, wherein the unit (200) is a monitoring unit and further comprises a camera (201).

19. A system comprising at least one unit (200) according to any one of claims 1-18.

20. A method for clamping a battery unit (108) in a battery housing (100) of a unit for a security system, the battery housing comprising a casing (101) comprising a bottom portion (102), a top portion (103) and at least one wall section (104) forming a battery compartment (105), a cover (106) releasably connectable to the casing (101), and a battery unit (108), the method comprising the steps of:
arranging (301) the battery unit (108) in the battery compartment (105),
displacing (303) the battery unit (108) from a first position towards a second position.

21. The method according to claim 20, wherein the step of displacing the battery unit (108) comprises arranging a displacement means (107) between the battery unit (108) and the casing (101), wherein the displacement means (107) displaces the battery unit (108) towards electrical contacts (109) arranged in the casing.

22. The method according to any of claims 20-21, wherein the step of arranging the battery unit (108) in the battery compartment (105) comprises inserting the battery unit (108) in an insertion direction (A) and the step of displacing the battery unit (108) comprises displacing the battery unit (108) in a displacement direction (B), wherein the insertion direction (A) is different from the displacement direction (B).

23. The method according to claim 22, wherein the insertion direction (A) is substantially perpendicular to the displacement direction (B).

24. The method according to any one of claims 20-23, wherein the step of arranging the battery unit (108) in the battery compartment (105) comprises inserting the battery unit (108) in a generally horizontal direction (A) into the battery compartment (105) such that a bottom of the battery unit (108) abuts against the bottom portion (102) of the battery compartment (105).

25. The method according to claim 15 and any one of claims 22-24, wherein the step of displacing the battery unit (108) comprises attaching a cover (106) to the casing (101), wherein the cover (101) comprises the displacement means (107) which displaces the battery unit (108) towards the electrical contacts (109).

26. The method according to any one of claims 20-25, wherein the step of displacing the battery unit (108) comprises operating an operating means which interacts with a latching mechanism (113) having interactable latching parts, at least one of which latching parts is displaceable, wherein displacing the displaceable latching part displaces the battery unit (108).
